# FASCICULE DE BREVET EUROPEEN

(11) **EP 0 516 504 B1**
(45) Date de publication et mention de la délivrance du brevet: **18.12.1996**
(21) Numéro de dépôt: 92401359.2
(22) Date de dépôt: 19.05.1992
(51) Int. Cl.: C08B 37/16

(54) **Utilisation d'un gaz pour l'obtention de cyclodextrines ou autres composés susceptibles de former des clathrates avec un gaz**
Verwendung von einem Gas zur Gewinnung von Cyclodextrinen oder anderen Verbindungen, die fähig sind mit einem Gas-Clathrate zu bilden
Use of a gas for obtaining cyclodextrins or other compounds which are able to form clathrates with a gas

(30) Priorité: 27.05.1991 FR 9106325
(43) Date de publication de la demande: 02.12.1992
(73) Titulaire: CHEMOXAL S.A., F-75007 Paris (FR)
(72) Inventeur: Ledon, Henry, F-78000 Versailles (FR); Larnicol, Pierre, F-71100 Chalon-sur-Saone (FR); Desmurs, Marie-Jeanne, F-71460 Saint Gengoux le National (FR); Dupont, Michel, F-71150 Chagny (FR)
(74) Mandataire: Caen, Thierry Alain

(56) Documents cités:
- FR-A- 2 457 900
- GB-A- 2 067 090
- US-A- 3 541 077
- CHEMISCHE BERICHTE. vol. 90, 1957, WEINHEIM DE pages 2572 - 2575; F. CRAMER ET HENGLEIN F.M.: "Uber Einschlussverbindungen, XII: Verbindungen von Cyclodextrin mit Gasen"

## Description

Les cyclodextrines sont des oligosaccharides cycliques obtenus par conversion enzymatique de l'amidon. Elles correspondent à la structure générale (C₆H₁₀O₅/n). Les trois cyclodextrines les plus courantes appelées α, β, γ comprennent respectivement 6, 7 et 8 unités glucoses.

Les cyclodextrines ont pour propriété remarquable de pouvoir former des complexes d'inclusion ou clathrates avec une large variété de composés chimiques (voir Cyclodextrins and their inclusion complexes de J. SZEJTLI, AKADEMIAI KIADO, Budapest 1982).

L'association entre le composé et la molécule hôte est basée, selon certains auteurs (voir S.M. Hagan, Clathrate Inclusion compounds, Reinhold Publishing corporation 1962, p.23), sur les multiples liaisons de Van der Waals intervenant entre les deux composés.

L'inclusion peut avoir lieu en solution ou à l'état solide. Toutefois, l'inclusion de molécule dans les cyclodextrines s'opère généralement à partir d'une solution ou suspension aqueuse.

Le complexe d'inclusion est généralement moins soluble que la cyclodextrine. L'inclusion peut donc conduire à la précipitation de cristaux de complexes encore appelés clathrates.

Par remise en solution du clathrate ou par simple chauffage, la substance insérée peut être libérée.

Les clathrates de gaz sont connus depuis 1957 (F. CRAMER et F.M. HENGLEIN, Chem. Ber. (1957), **90**, 2561-2571, et 2572-2575).

La plupart des gaz conduisent à la formation de complexes d'inclusion lorsqu'on les met en contact avec une solution de cyclodextrine. Toutefois, l'obtention de cristaux n'est pas toujours observée. C'est le cas notamment pour l'oxygène, l'azote et le monoxyde de carbone. Par contre le chlore, le dioxyde de carbone, le protoxyde d'azote (N₂O), le xénon, le krypton ainsi que tous les hydrocarbures légers (CH₄, C₂H₂, C₂H₄, C₂H₆, etc...) donnent des clathrates (voir : J. SZEJTLI, Cyclodextrin Technology, Kluwer Academic, Publischers, 1988, p.165-166).

Les cyclodextrines et leurs dérivés acylés, alkylés et glucosilés, sont utilisés pour l'inclusion de principes actifs ou d'arômes et parfums dans les domaines pharmaceutiques et cosmétiques respectivement.

Un brevet japonais [JP62039602 (1987)] décrit l'obtention de complexes de béta-cyclodextrines et dérivés avec le dioxyde de carbone, et leurs utilisations notamment dans le domaine cosmétique.

Les clathrates de gaz décrits ci-dessus sont préparés à partir de solutions de cyclodextrines elles-mêmes obtenues par conversion enzymatique de l'amidon.

L'isolement des cyclodextrines ainsi que leur purification a fait l'objet de nombreux travaux et publications (Dominique DUCHENE, Cyclodextrins and their industrial uses, Editions Santé, 1987).

La cristallisation directe des cyclodextrines issues du milieu utilisé pour la conversion enzymatique de l'amidon donne de mauvais rendements. En conséquence, plusieurs techniques élaborées et coûteuses de purification ont été développées, comme par exemple, la chromatographie (adsorption sur résines ou gel).

Un solvant approprié peut être également utilisé. Dans ce cas la cyclodextrine précipite dans le milieu sous forme de complexe cyclodextrine/solvant, et on peut la séparer du milieu par une technique classique, notamment soit par filtration soit par centrifugation.

Ces techniques chromatographiques ou de précipitation sus-mentionnées comportent de gros inconvénients liés principalement à l'utilisation du du solvant. Ces procédés nécessitent des installations particulières et coûteuses pour la manipulation du solvant (toxicité et inflammabilité) ainsi que son recyclage. Le brevet américain US-A-3,541,077 décrit une méthode d'obtention d'α-cyclodextrine à partir d'un mélange d'α-cyclodextrine et de β-cylodextrine, qui consiste à former sélectivement un clathrate entre l'α-cyclodextrine et un solvant.

Cependant, la présence du résidu de solvant dans les cyclodextrines est néfaste aux applications des cyclodextrines, notamment dans le domaine pharmaceutique.

La présente invention a précisément pour but de permettre d'obtenir des cyclodextrines à un coût plus faible et avec un meilleur rendement que ne le permettent les méthodes actuelles.

L'invention a également pour but l'obtention de cyclodextrines à un état de pureté très élevé (proche de 100 %), et ne présentant aucune traces de solvants ou dans des proportions ne compromettant pas leurs utilisations notamment dans le domaine pharmaceutique ou alimentaire.

L'invention concerne d'une manière générale l'utilisation d'un gaz pour l'isolement et la purification de toute substance ou produit susceptible de former un clathrate avec un gaz, à partir d'un mélange en solution ou en suspension de cette substance avec d'autres composants, comprenant la succession d'étapes suivantes :
- mise en présence dudit mélange, de préférence en solution aqueuse, avec un gaz, le cas échéant sous pression, jusqu'à la formation d'un précipité de clathrates formés entre ladite substance et le gaz,
- séparation du précipité de clathrates et des autres composants restés en solution dans les eaux mères du mélange initial, notamment par filtration,
- le cas échéant récupération de ladite substance par extrusion du gaz.

Ainsi le procédé de l'invention permet d'obtenir, à partir d'un mélange faiblement concentré en une substance susceptible de former un clathrate avec un gaz, un mélange enrichi en cette substance par rapport au mélange de départ.

Le procédé de l'invention peut également être avantageusement utilisé pour la purification de cette substance, notamment en répétant une ou plusieurs fois le cycle d'opérations (ou succession d'étapes) sus-mentionné à partir de la solution contenant la substance récupérée par extrusion du gaz et/ou en utilisant un autre procédé de purification, notamment par chromatographie, après avoir effectué au moins un cycle d'opérations décrit ci-dessus.

Il va de soi que le procédé de l'invention peut être effectué à nouveau à partir des eaux mères recueillies après l'étape de filtration susmentionnée afin d'en extraire la quantité de substance, encore présente dans le mélange initial, susceptible de former un clathrate avec un gaz.

A titre d'exemple de substances susceptibles de former des clathrates avec des gaz, dans le cadre du procédé sus-mentionné, on peut citer les cyclodextrines substituées ou non, ou encore l'eau, l'hydroquinone et ses dérivés, le phénol, et les dianines.

Les autres composants du mélange contenant la substance que l'on souhaite concentrer ou purifier, sont avantageusement soit des substances ne formant pas de clathrates avec le gaz utilisé, ou formant des clathrates qui ne précipitent pas.

Parmi les gaz susceptibles d'être utilisés on peut citer notamment :
- le dioxyde de carbone (CO₂), l'éthylène et le protoxyde d'azote pour la formation de clathrates avec les cyclodextrines ; le CO₂ est particulièrement avantageux en raison de son faible coût, sa bonne affinité pour les cyclodextrines, son absence de toxicité (le CO₂ est agréé alimentaire sous la référence E.290 dans la Directive Européenne sur les additifs n°89.107.EEC),
- l'Argon, le Néon, le Radon, le dioxyde de soufre, et le méthane pour la formation de clathrates avec l'eau ; le procédé de l'invention peut notamment être utilisé pour la purification de l'eau par formation de clathrate avec le propane (désalinification de l'eau),
- l'acétylène, l'azote, le protoxyde d'azote, l'oxyde d'azote, le dioxyde de soufre (SO₂), et l'hydrogène sulfureux (H₂S) pour la formation de clathrates avec l'hydroquinone et ses dérivés,
- le Xénon, CO₂, SO₂, H₂S pour la formation de clathrates avec le phénol,
- l'Argon et SO₂ pour la formation de clathrates avec les dianines.

L'invention a plus particulièrement pour objet un procédé d'obtention de cyclodextrines (α, β ou γ) à partir d'un mélange de dextrines comprenant des cyclodextrines, des dextrines linéaires ou ramifiées plus particulièrement des maltodextrines, caractérisé en ce que le mélange sus-mentionné en solution ou suspension aqueuse est mis en présence d'un gaz, avantageusement sous pression, jusqu'à la formation d'un précipité constitué de clathrates formés entre les cyclodextrines et le gaz, puis le précipité de clathrates est séparé des autres constituants du mélange restés à l'état soluble par filtration, et les cyclodextrines sont récupérées par extrusion du gaz.

Le procédé sus-mentionné comprend avantageusement la succession d'étapes suivantes :
- le cas échéant dissolution ou mise en suspension du mélange sus-mentionné à une température de l'ordre de 70°C, dans une solution aqueuse, de préférence dans des conditions proches de la saturation en cyclodextrines,
- le cas échéant, filtration de la solution obtenue pour éliminer les insolubles,
- mise en présence de la solution ainsi obtenue avec un gaz sous pression jusqu'à formation d'un précipité de clathrates entre les cyclodextrines et le gaz,
- isolement du précipité obtenu à l'étape précédente, notamment par filtration essorage ou centrifugation, suivi le cas échéant du séchage de ce précipité,
- le cas échéant, mise en solution du précipité humide obtenu à l'étape précédente et répétition du cycle d'étapes décrites ci-dessus,
- extrusion du gaz, notamment par dissolution de clathrate dans une solution aqueuse, ou par chauffage, notamment à une température allant d'environ 80°C à une température supérieure à 100°C,
- le cas échéant séparation des cyclodextrines et des autres composants éventuellement présents dans la solution obtenue à l'étape précédente, notamment par chromatographie.

Le mélange de cyclodextrines sus-mentionné est lui-même obtenu par conversion enzymatique de l'amidon, notamment à l'aide de cycloglucosyl transférase, selon des méthodes classiques dans ce domaine technique.

Avantageusement, dans le cadre de l'enrichissement en α-cyclodextrine ou de l'obtention sous forme purifiée de cette dernière, le mélange initial utilisé au départ du procédé contient au moins 25 % (en poids) d'α-cyclodextrine, et de préférence de l'ordre de 50 %. A titre illustratif, la détermination du pourcentage d'α-cyclodextrine présent dans le mélange peut être réalisée par chromatographie liquide haute performance (HPLC) selon la méthode décrite dans l'article de ZSADON et al, Journal of chromatography, **172** (1979) 490-492.

Comme il l'a été indiqué ci-dessus, un mélange comprenant de l'α-cyclodextrine est mis en solution aqueuse dans des concentrations proches de la saturation en α-cyclodextrine. La quantité de mélange mise en solution est fonction de la quantité d'α-cyclodextrine qu'elle contient, sachant que la solubilité de l'α-cyclodextrine est de 145 g/l à la température ambiante.

De manière avantageuse, le procédé de l'invention est réalisé dans l'enceinte d'un réacteur dans lequel est introduit le mélange en solution ou suspension aqueuse ; l'air présent dans le réacteur peut être chassé, soit par une série de cycles de "compression/détente" à l'aide du gaz utilisé, soit par une série de cycles de "vide/remise à la pression atmosphérique" à l'aide du gaz utilisé, puis ce dernier est avantageusement introduit sous pression.

Le clathrate précipite plus ou moins rapidement selon la température, la pression de gaz, les concentrations relatives des constituants du mélange.

Selon un mode préféré de réalisation du procédé de l'invention, la précipitation du clathrate est obtenue pour des valeurs de température supérieures à 2°C, avantageusement comprises entre 2 et 40°C, et de préférence entre 2 et 20°C. Les pressions de gaz utilisées sont de préférence supérieures à 1 bar, et plus préférentiellement sont comprises entre 1 et 20 bars, avantageusement entre 1 et 10 bars. Le temps de crystallisation (précipitation) est généralement compris entre 1 et 10h.

Après cristallisation, la solution est filtrée et le précipité est essoré, notamment sous vide, afin d'éliminer les eaux-mères du mélange initial. Le clathrate est éventuellement séché, de préférence à température relativement basse (inférieure à 40°C), notamment par un courant d'air traversant le lit de solide pulvérulent.

Avantageusement, le réacteur utilisé est équipé d'un dispositif de récupération de gaz lors de l'étape d'essorage, ce gaz pouvant ainsi être réutilisé lors de la mise en oeuvre à nouveau de ce procédé.

Le clathrate ainsi obtenu peut être à nouveau remis en solution ou suspension aqueuse et être soumis à un nouveau cycle d'opérations comme il l'a été précédemment décrit. Le titre en α-cyclodextrine du produit obtenu augmente en fonction du nombre des cycles d'opérations effectués.

Le procédé de l'invention correspond à un procédé d'enrichissement en cascade d'un mélange comprenant de l'α-cyclodextrine, et permet d'obtenir de manière excessivement aisée de l'α-cyclodextrine (α-CD) d'une bonne pureté.

La présente invention sera davantage détaillée dans la description qui suit d'exemples de la mise en oeuvre des procédés décrits ci-dessus.

### I UTILISATION DU CO₂

### A) Enrichissement d'un mélange contenant initialement 49 % d'α-cyclodextrine (schéma a)

### Exemple 1

### 1.1. Préparation de la solution

150 g d'un mélange α-CD/maltodextrine contenant 49 % en poids d'α-CD sont mis en solution dans 500 g d'eau permutée. La dissolution du mélange est obtenue par chauffage à 70°C. Les traces d'insolubles sont éliminées par filtration à chaud, sur fritté de porosité n°3 ou bien éventuellement sur un adjuvant de filtration.

La solution est refroidie à température ambiante.

### 1.2. Précipitation/filtration - séchage

La solution est alors introduite dans un réacteur double enveloppe de 1 l. L'air présent est chassé par une suite de cycle de compression détente, à l'aide de CO₂, puis le CO₂ est introduit sous une pression absolue de 4 bars.

L'agitation de la solution est assurée soit par barbotage du gaz soit par une turbine. La température de cristallisation est maintenue à 15°C pendant 3h. Puis le précipité est filtré sur fritté. Le précipité essoré est alors séché par courant d'air à 35°C, pendant 1h 30 avec un débit d'air de 28 1/h. On obtient 46 g de produit sec sous forme cristalline (possédant par exemple 5 à 7 molécules d'eau), dont le titre en α-CD est de 77 %. Le rendement massique est de 30 % et le rendement en α-CD est lui égal à 47 %.

### Exemple 2

### 2.1. Préparation de la solution

97,4 g de produit (à 77 % en α-CD) obtenus par plusieurs préparations selon l'exemple 1 sont mis en solution dans 496 g d'eau permutée. La dissolution est obtenue pour une température de 70°C. La solution est filtrée et refroidie comme décrit dans l'exemple 1.

### 2.2 Précipitation/filtration - séchage

La solution est introduite dans le même réacteur que décrit précédemment. L'air présent est chassé par une suite de cycle de compression détente, à l'aide de CO₂, puis le CO₂ est introduit sous une pression absolue de 3 bars. L'agitation de la solution est assurée soit par barbotage du gaz soit par une turbine. La température de cristallisation est maintenue à 17,5°C pendant 1h 30. Puis, le clathrate est filtré et essoré. Le clathrate humide est alors récupéré et séché par courant d'air à 35°C avec un débit d'air de 34 1/h. On obtient alors 51,1 g de produit sec, soit 52 % de rendement massique. Le titre en α-CD du produit est alors de 84,5 % en α-CD soit un rendement de 58 %.

### Exemple 3

### 3.1. Préparation de la solution

91 g de produit obtenu à l'exemple n°2 (titre en α-CD de 84,5 %), sont dissous dans environ 410 g d'eau permutée. La dissolution du mélange est obtenue comme précédemment décrit.

### 3.2. Précipitation/filtration - séchage

La solution est alors introduite dans le réacteur et le CO₂ introduit comme précédemment. La pression de CO₂ est égale à 3 bars absolus. Une température de 18°C est maintenue pendant toute la durée de la cristallisation soit 1h 15. Le précipité est alors filtré, essoré et séché en lit fluidisé. On obtient ainsi 60,5 g de produit sec, soit 66,5 % de rendement massique. La pureté en α-CD de produit obtenu est de 89 %, soit un rendement en α-CD de 67 %.

| **Tableau récapitulatif des résultats** | | | | | | | | |
|---|---|---|---|---|---|---|---|---|
| | produit engagé | | Conditions de précipitation | | | Produit obtenu | | |
| | Masse (g) | % en α-CD | Pression CO₂ bar absolu | T° °C | Temps | Masse (g) | % en α-CD | Rdt α-CD |
| Exemple 1 | 150 | 49 | 4 | 15 | 3 h | 46 | 77 | 47 |
| Exemple 2 | 97,4 | 77 | 3 | 17,5 | 1 h 30 | 51,1 | 84,5 | 58 |
| Exemple 3 | 91 | 84,5 | 3 | 18 | 1 h 15 | 60,5 | 89 | 67 |

### 3.3. Epuisement des eaux mères EM1 de l'exemple 1

Les eaux mères (titre en α-CD est d'environ 42 %) de l'exemple 1 sont reprises et introduites dans le réacteur comme décrit précédemment. L'air présent dans le réacteur est chassé par le CO₂ (suite de cycle compression/détente) et le CO₂ est introduit sous une pression de 6 bars absolus. La température de cristallisation de 15°C au début est progressivement amenée à 12°C en 5h. La durée de la cristallisation est de 5h. Le précipité alors obtenu, est filtré et séché. On recueille 9 g de produit sec à 73 % de pureté en α-CD. Le rendement massique est de 8 % et le rendement en α-CD est de 15 %.

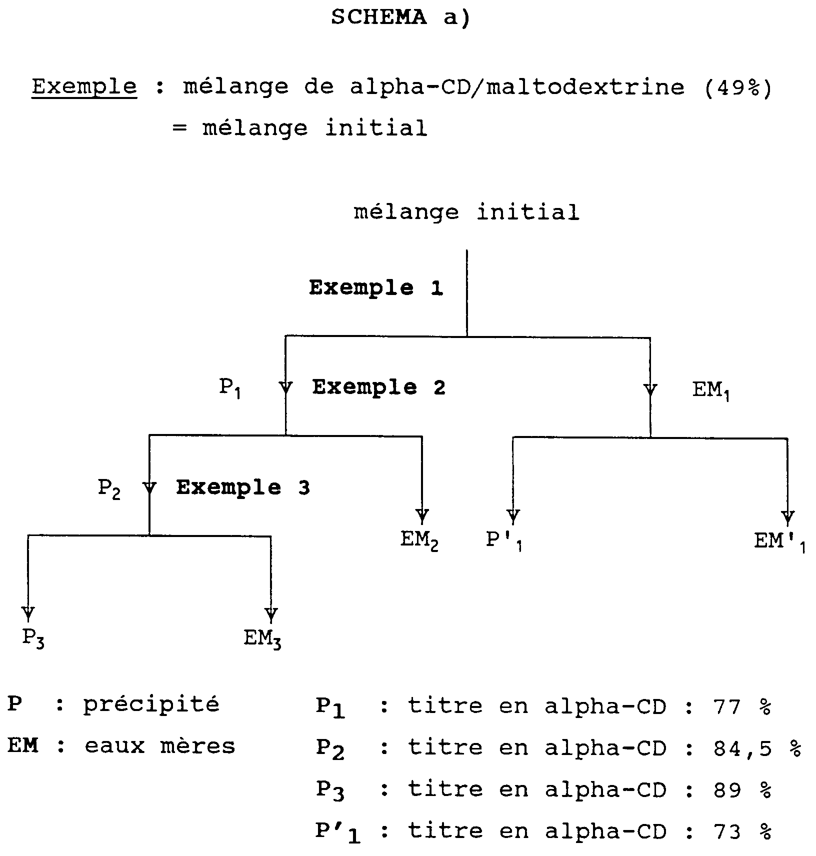

### B) ENRICHISSEMENT D'UN MELANGE CONTENANT INITIALEMENT 35 % D'α-CD

### 2.1 Préparation de la solution

137 g d'un mélange contenant 35 % en poids d'α-CD (soit 48 g d'α-CD) sont mis en solution dans 500 g d'eau permutée. La solution, agitée, est alors solubilisée à chaud (T°: 40°C). La solution ainsi obtenue n'est pas filtrée.

### 2.2 Précipitation/filtrage - séchage

La solution précédemment obtenue est introduite dans le réacteur et la mise sous pression de gaz s'effectue comme précédemment décrite. La pression de CO₂ est de 6 bars absolus. La température du milieu 20°C est progressivement amenée à 8 °C en 2h 30 mn et maintenue à 8 °C pendant encore 3h 10 mn. Le précipité est alors séché. On obtient alors 24 g de produit sec. Le rendement massique est égal à 17 %. Le titre en α-CD du précipité obtenu est de 80 % soit un rendement en α-CD de 40 %.

### II. UTILISATION DE L'ETHYLENE

Une solution contenant 278 g de mélange à 49 % en poids d'α-CD est introduite dans le réacteur précédemment décrit. Le réacteur est alors purgé par mise sous pression réduite et introduction d'azote puis l'éthylène est introduit sous une pression de 2 bars absolus. Après 1h 50, la pression d'éthylène est augmentée à 2,5 bars et est maintenue constante jusqu'à le fin de la manipulation. La température de cristallisation est de 30°C initialement et est amenée graduellement à 12°C en 4h 30. Le précipité est alors filtré, essoré et séché. On obtient alors 87,7 g de produit sec, soit un rendement massique de 32 %. Le titre en α-CD du produit est de 79,4 % soit un rendement en α-CD de 50 %.

### III. UTILISATION DU PROTOXYDE D'AZOTE

### 4.1 Préparation de la solution

285 g de mélange, dont le titre en α-CD est de 49 %, sont solubilisés à température de 60°C dans 660 g d'eau permutée. La solution refroidie est ensuite filtrée sur fritté.

### 4.2. Précipitation/filtration - séchage

La solution précédemment obtenue est introduite dans le réacteur. L'air est chassé par une mise sous vide puis le protoxyde d'azote est introduit. La pression de gaz est de 4 bars absolus et est maintenue constante tout au long de la précipitation. La température, de 30°C au départ, est graduellement amenée à 12°C. Le temps de précipitation est de 4h 25. Le précipité est alors filtré et essoré. Après séchage, on obtient 99,8 g de produit sec dont le titre en α-CD est de 84 %, soit un rendement massique de 35 %. Le rendement par rapport à α-CD est de 58 %.

## Revendications

1. Utilisation d'un gaz pour l'isolement et la purification de toute substance susceptible de former un clathrate avec ledit gaz, à partir d'un mélange en solution ou en suspension de cette substance avec d'autres composants, comprenant la succession d'étapes suivantes :
- mise en présence dudit mélange avec un gaz, le cas échéant sous pression, jusqu'à la formation d'un précipité de clathrates formés entre ladite substance et le gaz,
- séparation du précipité de clathrates et des autres composants restés en solution dans les eaux mères du mélange initial ;
- le cas échéant, récupération de ladite substance par extrusion du gaz.

2. Utilisation selon la revendication 1, caractérisée en ce que la succession d'étapes est répétée une ou plusieurs fois à partir de la solution contenant la substance récupérée par extrusion du gaz.

3. Utilisation selon la revendication 1 ou la revendication 2, caractérisée en ce qu'il comprend une étape supplémentaire de purification.

4. Utilisation selon l'une des revendications 1 à 3, pour la purification de toute substance susceptible de former un clathrate avec un gaz, à partir d'un mélange en solution ou en suspension de cette substance avec d'autres composants.

5. Utilisation selon l'une des revendications 1 à 3, caractérisée en ce qu'elle permet d'obtenir, à partir d'un mélange faiblement concentré en α-cyclodextrine (α-CD), un mélange enrichi en cette substance, ou d'obtenir l'α-CD sous forme purifiée en utilisant des gaz choisis parmi l'éthylène, le protoxyde d'azote et le CO₂.

6. Utilisation selon la revendication 5, caractérisée en ce qu'elle comprend les étapes suivantes :
- le cas échéant, dissolution ou mise en suspension du mélange d'α-CD et d'autres composants tels que les maltodextrines, à une température de l'ordre de 70°C, dans une solution aqueuse ;
- le cas échéant, filtration de la solution obtenue pour éliminer les insolubles ;
- mise en présence de la solution ainsi obtenue avec un gaz sous pression jusqu'à formation d'un précipité de clathrates entre les α-cyclodextrines et le gaz ;
- filtration et essorage du précipité obtenu à l'étape précédente, suivi du séchage de ce précipité ;
- le cas échéant, mise en solution du précipité ainsi obtenu et répétition du cycle d'étapes décrites ci-dessus ;
- extrusion du gaz ;
- le cas échéant, séparation des cyclodextrines et des autres composants éventuellement présents dans la solution obtenue à l'étape précédente.

7. Utilisation selon la revendication 6, caractérisée en ce que le mélange initial utilisé au départ du procédé contient au moins 25 % (en poids) d'α-cyclodextrine.

8. Utilisation selon la revendication 6 ou la revendication 7, caractérisée en ce que le mélange contenant l'α-cyclodextrine est mis en solution aqueuse dans des concentrations proches de la saturation en α-cyclodextrine.

9. Utilisation selon l'une des revendications 6 à 8, caractérisée en ce que la précipitation du clathrate est obtenue pour des valeurs de température supérieures à 2°C.

10. Utilisation selon l'une des revendications 6 à 9, caractérisée en ce que les pressions de gaz utilisées sont supérieures à 1 x 10⁵ Pa.

## Claims

1. Use of a gas for isolating and purifying any substance capable of forming a clathrate with the said gas, from a mixture in solution or in suspension of this substance with other compounds, comprising the following stages :
- putting the said mixture in contact with a gas, where necessary under pressure, until the formation occurs of a precipitate of clathrate formed between the said substance and the gas,
- separating the precipitate of clathrates from other compounds remaining in solution in the mother liquors of the original mixture;
- where necessary, recovering the said substance by expelling the gas.

2. Use according to claim 1, characterized in that the succession of stages is repeated one or more times starting with the solution containing the substance recovered by expelling the gas.

3. Use according to claim 1 or claim 2, characterized in that it comprises a supplementary purification stage.

4. Use according to one of claims 1 to 3, for purifying any substance capable of forming a clathrate with a gas, from a mixture in solution or in suspension of this substance with other compounds.

5. Use according to one of claims 1 to 3, characterized in that it makes it possible to obtain, from a mixture with a low concentration of α-cyclodextrin (α-CD), a mixture enriched in this substance, or to obtain α-CD in a purified form by using gases selected from ethylene, nitrous oxide and CO₂.

6. Use according to claim 5, characterized in that it comprises the following stages :
- where necessary, dissolving or suspending a mixture of α-CD and other compounds such as maltodextrins, at a temperature of the order of 70°C, in an aqueous solution;
- where necessary, filtering the solution obtained to remove insolubles;
- putting the solution thus obtained into contact with a gas under pressure until a precipitate forms of clathrates between the α-cyclodextrins and the gas;
- filtering and removing water from the precipitate obtained in the previous stage, and then drying this precipitate;
- where necessary, dissolving the precipitate thus obtained and repeating the stages described above;
- expelling the gas;
- where necessary, separating the cyclodextrins from other compounds which may possibly be present in the solution obtained in the previous stage.

7. Use according to claim 6, characterized in that the initial mixture used at the start of the process contains at least 25 % (by weight) of α-cyclodextrin.

8. Use according to claim 6 or claim 7, characterized in that the mixture containing α-cyclodextrin is put into aqueous solution in concentrations close to the saturation concentration of α-cyclodextrin.

9. Use according to one of claims 6 to 8, characterized in that precipitation of the clathrate is obtained for temperature values higher than 2°C.

10. Use according to one of claims 6 to 9, characterized in that the gas pressures used are greater than 1 × 10⁵ Pa.

## Patentansprüche

1. Verwendung eines Gases zum Isolieren und Reinigen beliebiger Substanzen, die ausgehend von einem in Lösung oder als Suspension vorliegenden Gemisch dieser Substanz mit anderen Komponenten leicht ein Clathrat mit dem Gas bilden, umfassend die Aufeinanderfolge der folgenden Schritte:
- Aussetzen des Gemischs an ein Gas, gegebenenfalls unter Druck, bis zur Bildung eines Niederschlags von zwischen der Substanz und dem Gas gebildeten Clathraten,
- Trennen des Niederschlags von Clathraten und der anderen, in Lösung in den Mutterflüssigkeiten des ursprünglichen Gemischs verbliebenen Komponenten;
- gegebenenfalls Wiedergewinnen der Substanz durch Austreiben des Gases.

2. Verwendung nach Anspruch 1, dadurch gekennzeichnet, daß die Aufeinanderfolge der Schritte ausgehend von der die durch Extrusion des Gases wiedergewonnenen Substanz enthaltenden Lösung ein- oder mehrmalig wiederholt wird.

3. Verwendung nach Anspruch 1 oder 2, gekennzeichnet durch einen zusätzlichen Reinigungsschritt.

4. Verwendung nach einem der Ansprüche 1 bis 3, zur Reinigung beliebiger Substanzen, die ausgehend von einem in Lösung oder als Suspension vorliegenden Gemisch dieser Substanz mit anderen Komponenten leicht ein Clathrat mit einem Gas bilden.

5. Verwendung nach einem der Ansprüche 1 bis 3, dadurch gekennzeichnet, daß sie erlaubt, aus einem Gemisch mit α-Cyclodextrin (α-CD) in schwacher Konzentration ein mit dieser Substanz angereichertes Gemisch zu gewinnen, oder das α-CD in Reinform zu gewinnen, indem aus Ethylen, Stickstoffoxid und CO₂ ausgewählte Gase verwendet werden.

6. Verwendung nach Anspruch 5, gekennzeichnet durch die nachstehenden Schritte:
- gegebenenfalls Auflösen oder Aufschlämmen des Gemischs aus α-CD und anderen Komponenten wie beispielsweise Maltodextrine bei einer Temperatur von etwa 70°C in einem wäßrigen Lösung;
- gegebenenfalls Filtern der gewonnenen Lösung zur Entfernung des Unlöslichen;
- Aussetzen der so gewonnenen Lösung an ein Gas unter Druck bis zur Bildung eines Niederschlags von Clathraten zwischen den α-Cyclodextrinen und dem Gas,
- Filtern und Schleudern des in dem vorangehenden Schritt gewonnenen Niederschlags, dann Trocknen dieses Niederschlags;
- gegebenenfalls Lösen des so gewonnenen Niederschlags und Wiederholen des vorstehend beschriebenen Zyklus von Schritten;
- Austreiben des Gases
- gegebenenfalls Trennen der Cyclodextrine und der anderen möglicherweise in der im vorangehenden Schritt erhaltenen Lösung vorhandenen Komponenten.

7. Verwendung nach Anspruch 6, dadurch gekennzeichnet, daß das zur Beginn des Verfahrens ursprünglich verwendete Gemisch zumindest 25 Gewichtsprozent α-Cyclodextrin enthält.

8. Verwendung nach Anspruch 6 oder 7, dadurch gekennzeichnet, daß das α-Cyclodextrin enthaltende Gemisch in Konzentrationen nahe der α-Cyclodextrin-Sättigung in wäßrige Lösung gebracht wird.

9. Verfahren nach einem der Ansprüche 6 bis 8, dadurch gekennzeichnet, daß der Clathrat-Niederschlag bei Temperaturen von mehr als 2°C erhalten wird.

10. Verfahren nach einem der Ansprüche 6 bis 9, dadurch gekennzeichnet, daß die Drücke verwendeter Gase größer sind als 1 x 10⁵ Pa.
